Europäisches Patentamt

European Patent Office

Office européen des brevets

(19)

(11) Veröffentlichungsnummer: **0 032 653**
**A2**

(12) **EUROPÄISCHE PATENTANMELDUNG**

(21) Anmeldenummer: **80730078.5**

(22) Anmeldetag: **15.12.80**

(51) Int. Cl.³: **C 09 D 11/00, C 09 D 11/16**

(30) Priorität: **15.12.79 DE 2950592**
**08.05.80 DE 3017601**

(43) Veröffentlichungstag der Anmeldung: **29.07.81**
**Patentblatt 81/30**

(84) Benannte Vertragsstaaten: **AT BE CH DE FR GB IT LI NL**

(71) Anmelder: **Pelikan Aktiengesellschaft,**
**Podbielskistrasse 141, D-3000 Hannover 1 (DE)**

(72) Erfinder: **Mecke, Norbert, Dr. Dipl.-Chem.,**
**Schieferkamp 3b, D-3000 Hannover 91 (DE)**
Erfinder: **Schmitt, Franz Ullrich, Dr. Dipl.-Chem.,**
**Sporstrasse 4, D-3000 Hannover 1 (DE)**
Erfinder: **Kuchenreuther, Wieland, Ing. grad.,**
**Fohrbleek 12, D-3004 Isernhagen 2 (DE)**

(74) Vertreter: **Eikenberg, Kurt-Rudolf, Dr. Dipl.-Chem. et al,**
**Patentanwälte Eikenberg & Brümmerstedt**
**Schackstrasse 1, D-3000 Hannover 1 (DE)**

(54) **Chemisch korrigierbare Tinte.**

(57)    Es handelt sich um chemisch korrigierbare Tinten für Schreib-Lösch-Systeme. Die Tinten sind sauer eingestellt und enthalten einen reaktiven Farbstoff auf der Basis von Triarylmethanfarbstoffen, Methinfarbstoffen bzw. Polymethinfarbstoffen und/oder Xanthenfarbstoffen. Sie sind zur Verwendung mit alkalisch eingestellten Tintenlöschflüssigkeiten bestimmt, die eine nur im alkalischen Milieu löschend auf die Tinte einwirkende Löschsubstanz, z. B. ein Sulfit oder eine basische Stickstoffverbindung enthalten. Um einen mittels der Löschflüssigkeit gelöschten Korrekturbereich auf dem Papier wieder mit der gleichen Tinte überschreiben zu können, enthalten die Tinten weiterhin noch einen Zusatz von 0,1 bis 10 Gew.%, vorzugsweise 0,5 bis 5 Gew.% an schwachen Säuren oder sauer reagierenden Salzen mit einem $pK_s$-Wert $> 0$. Dieser Zusatz bildet beim Überschreiben eines Korrekturbereiches mit dem auf dem Papier verbliebenen Alkali der Löschflüssigkeit ein schwach saures Puffergemisch, wodurch für den Korrekturschriftzug das alkalische Milieu beseitigt und damit die Wirkung der Löschsubstanz inhibiert wird.

**EIKENBERG & BRÜMMERSTEDT**
PATENTANWÄLTE IN HANNOVER

Pelikan AG                                    970/920 EU


Chemisch korrigierbare Tinte


Die Erfindung betrifft eine chemisch korrigierbare
Tinte für Schreib-Lösch-Systeme, die sauer eingestellt ist und
solche Farbstoffe enthält, die mit einer alkalisch eingestellten
Tintenlöschflüssigkeit entfärbbar sind.

Seit geraumer Zeit gibt es sogenannte "Tintenlöschstifte", die nach Art eines Faserschreibers aufgebaut sind und
eine Flüssigkeit enthalten, welche Tinte zu entfärben vermag.
Diese Tintenlöschstifte sind insbesondere für Schüler interessant, weil sie es gestatten, etwaige beim Schreiben mit Tinte
aufgetretenen Schreibfehler auf chemischem Wege durch bloßes
Überstreichen mit der Löschflüssigkeit wieder zu beseitigen.
Gegenüber einem mechanischen Radieren ergibt dies den Vorteil
einer einfachen und schnellen Korrektur, bei der die Struktur der
Papieroberfläche im Korrekturbereich kaum beeinträchtigt wird.

Grundsätzlich wäre es möglich, in den Tintenlöschstiften als wirksame Löschsubstanz starke Reagentien einzusetzen, mit denen der Tintenfarbstoff dauerhaft (beispielsweise
oxidativ) zerstört wird. Diese sind jedoch im Gebrauch insbesondere durch Schüler keineswegs problemlos und zerstören
meistens auch die Struktur der Papieroberfläche. Die Praxis ist
deshalb den Weg gegangen, angepaßte Schreib-Lösch-Systeme zu schaffen durch Verwendung von bestimmten Tintenarten und von speziellen problemlosen Löschflüssigkeiten, die diese Tintenarten aufgrund spezifischer chemischer Reaktionen zu entfärben vermögen.

Das in der Praxis derzeit wohl beste und gebräuchlichste Schreib-Lösch-System besteht aus Tinten auf der Basis von Triarylmethanfarbstoffen und aus Löschflüssigkeiten auf der Basis von sulfithaltigen Lösungen. Schriftzüge aus diesen Tinten lassen sich durch Überstreichen mit der Löschflüssigkeit in sehr kurzer Zeit völlig entfärben, ohne daß die Papierbeschaffenheit nennenswert und sichtbar verändert wird. In gleicher Weise wirken bei Tinten auf der Basis von Triarylmethanfarbstoffen aber auch Löschflüssigkeiten, die als wirksame Löschsubstanz eine basische Stickstoffverbindung in Form der freien Base enthalten. Weiterhin können, wie gefunden wurde, mit den gleichen Löschflüssigkeiten auch Tinten auf der Basis anderer Farbstoffe, nämlich auf der Basis von Methin- bzw. Polymethinfarbstoffen und Xanthenfarbstoffen gleichermaßen gut entfärbt werden.

Alle vorgenannten Tinten sind normalerweise sauer eingestellt, weil die betreffenden Farbstoffe dann ihre optimale Farbstärke aufweisen. Der günstigste pH-Wert liegt dabei je nach dem speziellen Farbstoff im Bereich von etwa 1 - 3. Demgegenüber besitzen die Löschflüssigkeiten einen stark alkalischen pH-Wert im Bereich von beispielsweise 13, weil die zur Entfärbung führende Reaktion zwischem dem Tintenfarbstoff und der Löschsubstanz nur im alkalischen Milieu abläuft. Außerdem verlieren manche Tintenfarbstoffe im stark alkalischen Milieu ohnehin ihre Farbe, auch wenn keine spezielle Löschsubstanz anwesend ist.

Um einen fehlerhaften Schriftzug mit der Löschflüssigkeit zum Verschwinden zu bringen, muß die Löschflüssigkeit zumindestens in so ausreichender Dosis auf das Papier aufgebracht werden, daß sich im Löschbereich das erforderliche alkalische Milieu einstellt und die Löschsubstanz wirksam werden kann. Da aber in der Praxis, insbesondere von ungeübten und ungeduldigen Schülern, die Löschflüssigkeit meistens überdosiert wird und außerdem die Löschflüssigkeit normalerweise auch eine verhältnismäßig hohe Konzentration an wirksamer Löschsubstanz hat, ergibt sich die zwangsläufige Folge, daß der Löschbereich anschließend nicht mehr mit der gleichen Tinte neu überschrieben werden kann. Die im Papier verbliebenen Bestandteile der Löschflüssigkeit, also die Löschsubstanz und das Alkali, werden nämlich auch dann, wenn die Löschflüssigkeit bereits völlig eingetrocknet ist, im Bereich des überschreibenden Schriftzuges wieder "aktiv" und bewirken sofort eine erneute Lösch-Reaktion. Infolgedessen ist es bei den zur Debatte stehenden Schreib-Lösch-Systemen üblich, das Überschreiben mit einer anderen, gegenüber der Löschflüssigkeit beständigen Tintenart vorzunehmen. Das aber erfordert ein zusätzliches zweites Schreibgerät und führt auch noch dazu, daß die Korrekturstelle infolge deutlicher Farbabweichungen sichtbar bleibt.

Es ist bislang nicht möglich gewesen, diesen Nachteil der Schreib-Lösch-Systeme zu vermeiden. Beispielsweise nützt es nichts, den Säure-Gehalt der Tinte zu erhöhen, um damit beim Überschreiben das im Papier befindliche Alkali zu neutralisieren, denn abgesehen davon, daß sich ein zu hoher Säure-Gehalt der Tinte aus vielen anderen Gründen verbietet, müßte dann für das anfängliche Löschen eine noch größere Dosis an Löschflüssigkeit auf das Papier aufgebracht werden, womit sich dann wieder die gleichen Verhältnisse einstellen. Denkbar wäre es allenfalls, eine Löschflüssigkeit zu verwenden, die eine sehr geringe Konzentration an wirksamer Löschsubstanz enthält und dadurch ein Überschreiben mit ggfs. ein- oder mehrmaliger Wiederholung des Korrekturschriftzuges ermöglicht, aber eine solche Löschflüssigkeit steht zur Zeit noch nicht zur Verfügung. Deshalb wurde es bislang als unvermeidbar hingenommen, daß der Korrekturbereich bei den Schreib-Lösch-Systemen nicht wieder mit der gleichen Tinte überschrieben werden kann.

Mit der Erfindung soll nunmehr eine Tinte für
Schreib-Lösch-Systeme mit alkalisch eingestellter Löschflüssigkeit geschaffen werden, die es gestattet, einen mit
der Löschflüssigkeit behandelten Korrekturbereich - nach
Trocknung desselben - sofort wieder mit der gleichen Tinte
und folglich auch mit dem gleichen Schreibgerät zu überschreiben.

Dieses Ziel erreicht die Erfindung dadurch, daß die
Tinte einen Zusatz von 0,1 bis 10 Gew.% und vorzugsweise 0,5
bis 5 Gew.% an schwachen Säuren oder sauer reagierenden Salzen
enthält, welcher auf dem Papier mit den alkalisch reagierenden
Bestandteilen der Löschflüssigkeit ein schwach sauer reagierendes
Puffergemisch bildet. Die Säuren oder Salze sollen dabei einen
$pK_s$-Wert $>$ 0 haben.

Es ist zwar an sich bekannt, Tinten mit schwachen
Säuren zu versetzen, um sie (z.B. mit Citronensäure) sauer einzustellen oder um sie (mit z.B. Salicylsäure oder anderen
aromatischen Hydroxycarbonsäuren) zu konservieren. Demgegenüber kommt es bei der Erfindung darauf an, in die Tinte einen
Zusatz solcher Art und solcher Menge einzubringen, der für die
normale Benutzung der Tinte keine Bedeutung hat und erst beim
Überschreiben eines vorher mit der Löschflüssigkeit behandelten Korrekturbereichs wirksam wird, indem er gezielt das das
Überschreiben hindernde Alkali wegpuffert. Dieser Gedanke, mit
Hilfe des Zusatzes zur Tinte nur auf dem Papier und dort auch
nur in dem durch den Korrekturbereich verlaufenden Schriftzügen (also nur dort, wo es erforderlich ist) ein schwach
sauer reagierendes und damit die Löschwirkung der im Papier
verbliebenen Bestandteile der Löschflüssigkeit inhibierendes
Puffergemisch zu bilden, ist von den bekannten Tinten mit
einem Gehalt an schwachen Säuren aus nicht herleitbar.

Demgemäß besteht ein weiterer Aspekt der Erfindung in der Verwendung einer einen Zusatz von 0,1 bis 10 Gew.% einer schwachen Säure oder eines sauer reagierenden Salzes mit einem $pK_S$-Wert > 0 enthaltenden Tinte auf der Basis von im alkalischen Milieu entfärbbaren Farbstoffen in Verbindung mit einer alkalisch eingestellten Tintenlöschlösung. Die Tinte kann dabei Triarylmethanfarbstoffe, Methinfarbstoffe bzw. Polymethinfarbstoffe und/oder Xanthenfarbstoffe enthalten.

Als Zusatz zur Tinte kommen alle schwachen Säuren oder sauren Salze infrage, die sich stabil in der Tinte lösen lassen und frei von unerwünschten Nebenwirkungen (z.B. in physiologischer Hinsicht) sind. Bevorzugt werden schwache organische Säuren wie beispielsweise Milchsäure, Citronensäure, Weinsäure und Oxalsäure (einschließlich Gemischen derselben) oder saure anorganische Salze wie Zinkchlorid und Aluminiumsulfat. Die Menge an Zusatz muß so bemessen sein, daß sich beim Überschreiben eines Korrekturbereichs ein Puffergemisch mit ausreichend hoher Pufferkapazität einstellt. Da die Menge des im Papier befindlichen Alkalis unbekannt ist und auch je nach der aufgetragenen Menge an Löschflüssigkeit schwanken kann, wird zweckmäßig ein gewisser "Sicherheitsüberschuß" an Zusatz verwendet. Das ergibt die Grenzwerte von 0,1 bis 10 Gew.% und vorzugsweise 0,5 bis 5 Gew.%.

Der Zusatz kann, insbesondere wenn er aus schwachen Säuren besteht, zugleich dazu herangezogen werden, die Tinte sauer einzustellen. Besser ist es jedoch, zur sauren Einstellung der Tinte in üblicher Weise eine Mineralsäure wie Schwefelsäure einzusetzen, weil dann der pH-Wert der Tinte unabhängig von dem Wert, den die schwache Säure ergeben würde, auf den für die Farbtiefe des jeweiligen Farbstoffes optimalen Wert gebracht werden kann.

Das sich beim Überschreiben eines Korrekturbereiches bildende, schwach saure Puffergemisch puffert naturgemäß nicht nur das im Papier befindliche Alkali ab, sondern setzt auch im Korrekturschriftzug den pH-Wert der Tinte auf den durch das Puffergemisch vorgegebenen Wert herab. Diese Tatsache stört aber nicht weiter, weil die sich dadurch ergebenden Farbabweichungen mit dem bloßen Auge kaum erkennbar sind, ganz im Gegensatz zu den oftmals markanten Farbabweichungen, die sich bisher beim Überschreiben mit einer fremden Tinte ergeben haben.

Von der Löschflüssigkeit, die zusammen mit der Tinte das Schreib-Lösch-System bildet, ist lediglich gefordert, daß sie für die Löschwirkung ein alkalisches Milieu benötigt und außerhalb des alkalischen Milieus keine Löschwirkung ergibt. Damit ist die Erfindung unabhängig von dem Vorhandensein bestimmter spezieller Löschsubstanzen.

Nachfolgend werden Ausführungsbeispiele der Erfindung angegeben.

## Beispiel 1

Zusammensetzung von Tinten mit Triarylmethanfarbstoffen:

a)
| | | |
|---|---|---|
| Tintenblau, C.I. Acid Blue 93 | 0,8 | g |
| Glycerin | 1,2 | g |
| Netzmittel | 0,05 | g |
| Citronensäure | 2,0 | g |
| Schwefelsäure | 0,25 | g |
| Wasser | 98,0 | g |

b)
| | | |
|---|---|---|
| Tintenblau | 0,8 | g |
| Glycerin | 1,2 | g |
| Netzmittel | 0,1 | g |
| Schwefelsäure | 0,25 | g |
| Aluminiumsulfat | 4,0 | g |
| Wasser | 98,0 | g |

| c) | Tintenblau | 0,8 | g |
|---|---|---|---|
| | Glycerin | 1,2 | g |
| | Netzmittel | 0,1 | g |
| | Schwefelsäure | 0,25 | g |
| | Zinkchlorid | 5,0 | g |
| | Wasser | 98,0 | g |

| d) | Tintenblau | 0,8 | g |
|---|---|---|---|
| | Glycerin | 1,2 | g |
| | Netzmittel | 0,1 | g |
| | Schwefelsäure | 0,25 | g |
| | Tannin | 5,0 | g |
| | Wasser | 98,0 | g |

| e) | Tintenblau | 0,8 | g |
|---|---|---|---|
| | Glycerin | 1,2 | g |
| | Netzmittel | 0,1 | g |
| | Schwefelsäure | 0,25 | g |
| | Phosphorsäure | 3,0 | g |

| f) | Tintenblau | 0,8 | g |
|---|---|---|---|
| | Netzmittel | 0,1 | g |
| | Milchsäure | 1,5 | g |
| | Citronensäure | 1,0 | g |
| | Wasser | 96,6 | g |

Anstelle von Tintenblau können in allen Fällen auch andere Triarylmethanfarbstoffe eingesetzt werden, wie z.B. Astrarhodulinblau, C.I. Basic Blue 1, oder Duasynsäureblau SN, C.I. Acid Blue 93.


Beispiel 2

Zusammensetzung einer Tinte mit Polymethinfarbstoffen:

| Astrazonviolett F3RL, C.I. Basic Violet 21 | 1,0 | g |
|---|---|---|
| Citronensäure | 2,0 | g |
| Glykol | 3,0 | g |
| Wasser | 94,0 | g |

Andere geeignete Methin- bzw. Polymethinfarbstoffe sind beispielsweise Astrazonrot 6B, C.I. Basic Violet 7, Astrazonblau 5RL, C.I.
Basic Blue 62, Astrazonviolett FRR, C.I. Basic Violet 20 oder
Astragelb R, C.I. Basic Yellow 44. Diese können analog in die
vorstehende Rezeptur eingesetzt werden.

Beispiel 3

Zusammensetzung einer Tinte mit Xanthenfarbstoffen:

| | |
|---|---|
| Methylenrot, C.I. 45006 | 1,0 g |
| Citronensäure | 2,0 g |
| Glykol | 3,0 g |
| Wasser | 94,0 g |

Ein Beispiel für andere, in die vorstehende Rezeptur einsetzbare Xanthenfarbstoffe ist Rhodaminscharlach, C.I. 45015.

Die Tinten gemäß den vorstehenden Ausführungsbeispielen wurden daraufhin untersucht, ob mit ihnen ein zuvor mit verschiedenen Typen basischer Tintenlöschflüssigkeiten (Lösungen
eines Sulfits, eines Polyamins, eines Polyimins sowie von Äthanolamin und Äthanolaminsulfit, jeweils mit NaOH auf pH 13 eingestellt) behandelter Korrekturbereich wieder überschrieben werden kann. In allen Fällen ergab sich dabei eine einwandfreie
Überschreibbarkeit des Korrekturbereiches auch dann, wenn zuvor
eine verhältnismäßig hohe Dosis an Löschflüssigkeit auf das Papier gebracht worden war. Lediglich mußte als Voraussetzung beachtet werden, daß der Korrekturbereich vollständig trocken war,
weil sonst der Korrekturschriftzug im noch feuchten Papier zum
Verlaufen neigte.

Auf der anderen Seite war ein auf frisches Papier aufgebrachter Schriftzug aus den Tinten gemäß den vorstehenden Ausführungsbeispielen durch Auftrag der Löschflüssigkeiten in kurzer Zeit völlig löschbar. Damit ist es durch die Erfindung in

0032653

überraschender Weise gelungen, ein Schreib-Lösch-System zu schaffen, bei dem ein gelöschter Korrekturbereich anschließend wieder mit der gleichen Tinte überschrieben werden kann.

Patentansprüche

1. Chemisch korrigierbare Tinte für Schreib-Lösch-Systeme, die sauer eingestellt ist und solche Farbstoffe enthält, die mit einer alkalisch eingestellten Tintenlöschflüssigkeit entfärbbar sind, dadurch gekennzeichnet, daß die Tinte einen Zusatz von 0,1 bis 10 Gew.% an schwachen Säuren oder sauer reagierenden Salzen mit einem $pK_S$-Wert $> 0$ enthält, welcher auf dem Papier mit dem alkalisch reagierenden den Bestandteilen der Löschflüssigkeit ein schwach sauer reagierendes Puffergemisch bildet.

2. Verwendung einer einen Zusatz von 0,1 bis 10 Gew.%, vorzugsweise 0,5 bis 5 Gew.% an schwachen Säuren oder an sauer reagierenden Salzen mit einem $pK_S$-Wert $> 0$ enthal- tenden Tinte mit alkalisch entfärbbaren Farbstoffen auf der Basis von Triarylmethanfarbstoffen, Methinfarbstoffen bzw. Polymethinfarbstoffen und/oder Xanthenfarbstoffen in Verbindung mit einer alkalisch eingestellten und nur im alka- lischen Milieu wirksamen Tintenlöschflüssigkeit.